# EUROPÄISCHE PATENTSCHRIFT

(11) **EP 2 582 957 B1**
(45) Veröffentlichungstag und Bekanntmachung des Hinweises auf die Patenterteilung: **11.10.2017**
(21) Anmeldenummer: 11727117.1
(22) Anmeldetag: 15.06.2011
(51) Int. Cl.: F02F 1/24, F02F 1/40, F01P 3/02, F01P 7/14

(54) **BRENNKRAFTMASCHINE MIT KÜHLMITTEL-SAMMELSCHIENE FÜR NACHLAUF- UND/ODER WARMLAUFKÜHLUNG**
INTERNAL COMBUSTION ENGINE COMPRISING A COOLANT COLLECTOR FOR SHUT-DOWN COOLING AND/OR WARM-UP COOLING
MOTEUR À COMBUSTION INTERNE POURVU D'UN CONDUIT COLLECTEUR POUR FLUIDE DE REFROIDISSEMENT, POUR LE POST-REFROIDISSEMENT ET/OU LE REFROIDISSEMENT DURANT LA PHASE DE MONTÉE EN TEMPÉRATURE

(30) Priorität: 18.06.2010 DE 102010024319
(43) Veröffentlichungstag der Anmeldung: 24.04.2013
(73) Patentinhaber: Audi AG, 85045 Ingolstadt (DE)
(72) Erfinder: ADAM, Stephan, 85101 Lenting (DE); DOERR, Joachim, 85055 Ingolstadt (DE); POHLMANN, Axel, 85134 Stammham (DE)
(86) Internationale Anmeldenummer: PCT/EP2011/002957
(87) Internationale Veröffentlichungsnummer: WO 2011/157417

(56) Entgegenhaltungen:
- JP-A- 2008 075 507
- JP-A- 2009 216 063
- JP-A- 2009 257 227
- JP-A- 2009 275 575
- JP-U- 56 006 925

## Beschreibung

Die Erfindung betrifft eine Brennkraftmaschine gemäß dem Oberbegriff des Anspruchs 1, sowie ein Verfahren zum Betreiben einer erfindungsgemäßen Brennkraftmaschine gemäß Anspruch 8 und/oder 9.

Bei einer Brennkraftmaschine mit einem in den Zylinderkopf integrierten Abgaskrümmer werden im Abgaskrümmer größere Wärmemengen gespeichert als dies bei einer herkömmlichen Brennkraftmaschine mit einem externen Abgaskrümmer der Fall ist. Dies kann gegebenenfalls dazu führen, dass nach dem Abstellen der Brennkraftmaschine das Kühlmittel im integrierten Abgaskrümmer zu sieden beginnt, was eine Schädigung des Kühlmittels zur Folge hätte. Ein solches unerwünschtes Sieden des Kühlmittels im Bereich des Abgaskrümmers kann dadurch vermieden werden, dass der integrierte Abgaskrümmer nach dem Abstellen der Brennkraftmaschine durch eine sogenannte Nachlaufkühlung noch über einen gewissen Zeitraum gekühlt wird.

Eine Brennkraftmaschine mit integriertem Abgaskrümmer ist aus JP 2008 075507 bekannt. Eine Brennkraftmaschine mit beschleunigter Kühlung der Abgasseite ist aus JP 2009 257227 oder JP 2009 216063 bekannt. Wenn die Nachlaufkühlung durch Umwälzung von Kühlmittel mittels einer elektrischen Kühlmittelpumpe durch einen zusammenhängenden Wassermantel des Zylinderkurbelgehäuses, des Zylinderkopfs und des integrierten Abgaskrümmers vorgenommen wird, wird jedoch nur ein relativ geringer Teil des umgewälzten Kühlmittels in den Abgaskrümmer zugeführt. Um eine ausreichende Kühlung zu gewährleisten, muss daher die elektrische Kühlmittelpumpe eine große Kühlmittelmittelmenge umwälzen und somit entsprechend groß dimensioniert werden.

Darüber hinaus wird in der Zukunft auch einer schnellen Aufheizung von Brennkraftmaschinen nach einem Kaltstart große Bedeutung zukommen, da auf diese Weise nach dem Kaltstart nicht nur für eine Reibungsminderung und damit für einen geringeren Kraftstoffverbrauch gesorgt werden kann, sondern auch für eine Verringerung der Schadstoffemissionen. Bei einer Brennkraftmaschine eines Kraftfahrzeugs kann durch eine schnelle Aufheizung zudem frühzeitig erwärmtes Kühlmittel in Heizungswärmetauscher des Kraftfahrzeugs zugeführt werden, um dessen Innenraum zur Erhöhung des Komforts der Fahrzeuginsassen schneller zu erwärmen. Jedoch setzt eine schnelle Aufheizung der Brennkraftmaschine voraus, dass das Kühlmittel im Wassermantel der Brennkraftmaschine unmittelbar nach deren Start nicht oder kaum bewegt wird. Dies wiederum ist nur so lange möglich, bis das Kühlmittel an denjenigen Stellen des Wassermantels, wo es sich am schnellsten erwärmt, seinen Siedepunkt nahezu erreicht. Bei Brennkraftmaschinen mit integriertem Abgaskrümmer befindet sich eine dieser Stellen im integrierten Abgaskrümmer. Wenn dort beim Warmlauf der Brennkraftmaschine ein Sieden des Kühlmittels verhindert werden soll, indem dieses durch den Wassermantel umgewälzt wird, treten bei einem zusammenhängenden Wassermantel ähnliche Probleme auf, wie zuvor für die Nachlaufkühlung beschrieben. Das heißt, es gelangt nur ein relativ geringer Teil des umgewälzten Kühlmittels in den integrierten Abgaskrümmer, während ein relativ großer Teil des Kühlmittels durch das Zylinderkurbelgehäuse strömt. Dadurch werden dort unnötigerweise die Zylinder gekühlt, so dass zumindest die angestrebte Minderung der Reibung und des Kraftstoffverbrauchs nicht erzielt werden kann.

Ausgehend hiervon liegt der Erfindung die Aufgabe zugrunde, trotz eines zusammenhängenden Wassermantels dafür zu sorgen, dass bei einer Nachlauf- und/oder Warmlaufkühlung des Abgaskrümmers ein überwiegender Anteil des in den Wassermantel zugeführten Kühlmittels zum integrierten Abgaskrümmer gelangt, während nur ein geringer Anteil des Kühlmittels um die Zylinder herum durch das Zylinderkurbelgehäuse strömt.

Diese Aufgabe wird erfindungsgemäß dadurch gelöst, dass der Kühlmittelkreislauf eine Sammelschiene umfasst, die durch Durchtrittsöffnungen mit reduziertem Öffnungsquerschnitt mit dem Wassermantel kommuniziert, und dass in gerader Verlängerung einer Strömungsrichtung in den Durchtrittsöffnungen angeordnete Kühlmittelkanäle des Wassermantels zum Abgaskrümmer führen, während hinter den Durchtrittsöffnungen seitlich abzweigende Kühlmittelkanäle des Wassermantels in das Zylinderkurbelgehäuse führen.

Der Erfindung liegt der Gedanke zugrunde, das in die Sammelschiene zugeführte Kühlmittel durch die Reduzierung des Öffnungsquerschnitts der Durchtrittsöffnungen innerhalb der Durchtrittsöffnungen stark zu beschleunigen, so dass das Kühlmittel bei seinem Austritt aus den Durchtrittsöffnungen einen hohen Strömungsimpuls besitzt. Dieser Strömungsimpuls bewirkt hinter den Durchtrittsöffnungen, dass dort der überwiegende Anteil des Kühlmittel geradeaus, d.h. in Verlängerung der Strömungsrichtung innerhalb der Durchtrittsöffnungen, weiter durch diejenigen Kühlmittelkanäle strömt, die allgemein mit den Durchtrittsöffnungen fluchten und zum Abgaskrümmer führen, während nur ein geringer Anteil des Kühlmittels in die hinter den Durchtrittsöffnungen seitlich in das Zylinderkurbelgehäuse abzweigenden Kühlmittelkanäle umgelenkt wird. Die zuvor beschriebenen Strömungsverhältnisse wurden durch rechnerische Simulationen bestätigt, nach denen ein sehr großer Teil des in die Sammelschiene zugeführten Kühlmittels tatsächlich in den integrierten Abgaskrümmer gelangt. Damit kann die Kühlung des integrierten Abgaskrümmers im Nachlauf und beim Warmlauf der Brennkraftmaschine verbessert werden, ohne dass eine große Kühlmittelmenge durch den Wassermantel umgewälzt werden muss.

Unter den in der nachfolgenden Beschreibung verwendeten Begriffe "Wassermantel des Zylinderkurbelgehäuses", "Wassermantel des Zylinderkopfs" und "Wassermantel des integrierten Abgaskrümmers" sollen keine voneinander getrennten Wassermäntel verstanden werden, sondern ein einziger zusammenhängender Wassermantel, dessen im Zylinderkurbelgehäuse, im Zylinderkopf und im Abgaskrümmer ausgesparten Teile oder Kühlmittelkanäle miteinander kommunizieren.

Eine bevorzugte Ausgestaltung der Erfindung sieht vor, dass das Kühlmittel der Sammelschiene zur Warmlaufkühlung des Abgaskrümmers mittels einer von der Brennkraftmaschine angetriebenen, in einem Hauptkreis des Kühlmittelkreislaufs enthaltenen Hauptkühlmittelpumpe und zur Nachlaufkühlung mittels einer in einem Nebenzweig des Kühlmittelkreislaufs enthaltenen elektrischen Kühlmittelpumpe zugeführt werden kann, wenn sich nach dem Abstellen der Brennkraftmaschine die von der Brennkraftmaschine angetriebene Hauptkühlmittelpumpe im Stillstand befindet. Da das Kühlmittel aus der Sammelschiene durch die erfindungsgemäße Merkmalskombination zum überwiegenden Teil in den integrierten Abgaskrümmer zugeführt wird und daher ein relativ geringer Kühlmittelstrom für dessen Kühlung ausreichend ist, kann die elektrische Kühlmittelpumpe kleiner dimensioniert werden, als dies bei einer Durchströmung des gesamten Wassermantels mit Kühlmittel der Fall wäre. Während des Normalbetriebs der Brennkraftmaschine wird die elektrische Kühlmittelpumpe abgeschaltet und das Kühlmittel mittels der Hauptkühlmittelpumpe umgewälzt, wobei es jedoch nicht in den Nebenzweig und in die Sammelschiene, sondern durch mindestens einen anderen Einlass in den Wassermantel der Brennkraftmaschine zugeführt wird, um es derart durch die Kühlmittelkanäle des Wassermantels hindurch zu leiten, dass zuerst das Zylinderkurbelgehäuse und dann der Zylinderkopf und der Abgaskrümmer vom Kühlmittel durchströmt werden.

Bei Brennkraftmaschinen von Kraftfahrzeugen ist in den zur Sammelschiene führenden Nebenzweig zweckmäßig mindestens ein Heizungswärmetauscher eingebunden, so dass beim Warmlauf der Brennkraftmaschine im Bedarfsfall eine schnelle Erwärmung des Innenraums des Kraftfahrzeugs möglich ist. Der Nebenzweig kann weiter auch noch dazu dienen, einen Abgasturbolader der abgestellten Brennkraftmaschine zu kühlen. Da dem Abgasturbolader auch während des Normalbetriebs der Brennkraftmaschine Kühlmittel zugeführt werden muss, ist er zweckmäßig auch an den Hauptkreis des Kühlmittelkreislaufs angeschlossen.

Gemäß einer weiteren bevorzugten Ausgestaltung der Erfindung ist die Sammelschiene in das Zylinderkurbelgehäuse integriert, da auf diese Weise eine einfache Anbindung der Sammelschiene an den Wassermantel des Zylinderkurbelgehäuses ermöglicht werden kann. In diesem Fall sind die Durchtrittsöffnungen mit den reduzierten Öffnungsquerschnitten zweckmäßig in aufwärts gerichteten Auslasskanälen der Sammelschiene angeordnet, in deren Verlängerung die zum Wassermantel des Abgaskrümmers führenden Kühlmittelkanäle nach oben führen.

Die Integration der Sammelschiene in das Zylinderkurbelgehäuse hat auch den Vorteil, dass bereits in der Zylinderkopfdichtung vorhandene Strömungsdurchlässe, durch die im Normalbetrieb der Brennkraftmaschine ein Teil des Kühlmittels in den Wassermantel des Zylinderkopfs und des Abgaskrümmers strömt, genutzt werden können, um beim Nachlauf bzw. Warmlauf der Brennkraftmaschine das durch die verengten Durchtrittsöffnungen aus der Sammelschiene strömende Kühlmittel in die Kühlmittelkanäle des Wassermantels des Abgaskrümmers zu leiten. Dies macht eine Modifikation bereits existierender Zylinderköpfe mit integriertem Abgaskrümmer entbehrlich. Die Durchtrittsöffnungen der Sammelschiene sind dann vorteilhaft unterhalb von den Strömungsdurchlässen der Zylinderkopfdichtung in den aufwärts gerichteten Auslasskanälen der Sammelschiene angeordnet, so dass der überwiegende Teil des beim Nachlauf bzw. Warmlauf der Brennkraftmaschine durch die Auslasskanäle und die Durchtrittsöffnungen strömende, in den Durchtrittsöffnungen beschleunigte Kühlmittels in gerader Linie nach oben durch die Strömungsdurchlässe der Zylinderkopfdichtung und dann in den Wassermantel des Abgaskrümmers strömt. Hingegen zweigen die in den Wassermantel des Zylinderkurbelgehäuses führenden Kühlmittelkanäle unterhalb von der Zylinderkopfdichtung bzw. von deren Strömungsdurchlässen nach einer oder mehreren Seiten aus den Auslässen ab, so dass nur ein geringer Teil des Kühlmittels in diese Kühlmittelkanäle strömt.

Beim Betrieb der erfindungsgemäßen Brennkraftmaschine wird das durch den Kühlmittelkreislauf umgewälzte Kühlmittel nach dem Abstellen und/oder beim Warmlauf der Brennkraftmaschine zur Nachlauf- bzw. Warmlaufkühlung des integrierten Abgaskrümmers in die Sammelschiene zugeführt, um einerseits den Abgaskrümmer ausreichend zu kühlen, andererseits jedoch die Menge des Kühlmittels zu begrenzen, die zu diesem Zweck durch den Wassermantel der Brennkraftmaschine umgewälzt werden muss. Die Zufuhr des Kühlmittels in die Sammelschiene erfolgt bevorzugt durch einen Nebenzweig des Kühlmittelkreislaufs, durch den im Normalbetrieb der Brennkraftmaschine kein Kühlmittel umgewälzt wird. Bei Brennkraftmaschinen von Kraftfahrzeugen kann das Kühlmittel durch einen Heizungswärmetauscher in die Sammelschiene zugeführt werden, um beim Warmlauf der Brennkraftmaschine für eine schnelle Erwärmung des Innenraums des Kraftfahrzeugs zu sorgen.

Im Folgenden wird die Erfindung anhand eines in der Zeichnung dargestellten Ausführungsbeispiels näher erläutert. Es zeigen
Fig. 1 eine schematische Darstellung eines Kühlmittelkreislaufs einer Brennkraftmaschine mit einem integrierten Abgaskrümmer;
Fig. 2 eine perspektivische Ansicht des Wassermantels der Brennkraftmaschine und einer an den Wassermantel angebundenen Sammelschiene;
Fig. 3 eine etwas vergrößerte perspektivische Ansicht des Wassermantels des Zylinderkurbelgehäuses und der Sammelschiene;
Fig. 4 und 5 perspektivische Ansichten entsprechend Fig. 3 zur Erläuterung der Strömungsverhältnisse im Wassermantel des Zylinderkurbelgehäuses im Normalbetrieb bzw. nach dem Abstellen und beim Warmlauf der Brennkraftmaschine;
Fig. 6 eine vergrößerte schematische Schnittansicht entlang der Linie VI-VI der Fig. 3 zur Erläuterung der Funktionsweise der Sammelschiene.

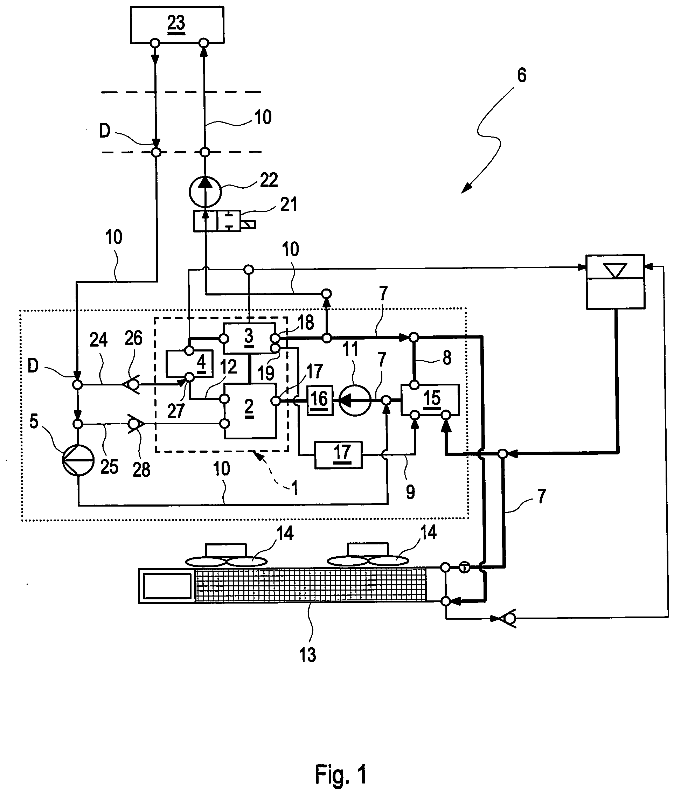

Die in Fig. 1 nur schematisch dargestellte Brennkraftmaschine 1 eines Kraftfahrzeugs besitzt ein Zylinderkurbelgehäuse 2, einen Zylinderkopf 3, einen in den Zylinderkopf 3 integrierten Abgaskrümmer 4, sowie einen Abgasturbolader 5 und wird durch ein flüssiges Kühlmittel gekühlt, das durch einen Kühlmittelkreislauf 6 umgewälzt wird.

Wie in Fig. 1 dargestellt, umfasst der Kühlmittelkreislauf 6 einen Hauptkreis 7, einen Kurzschlusszweig 8, einen Motorölkühlerzweig 9 und einen Nebenzweig 10. Der Hauptkreis 7 umfasst eine von der Brennkraftmaschine 1 angetriebene Hauptkühlmittelpumpe 11, die das Kühlmittel während des Normalbetriebs der Brennkraftmaschine 1 umwälzt, wobei es zuerst durch einen Wassermantel 12 der Brennkraftmaschine 1 und dann durch einen Hauptkühler 13 mit Gebläse 14 zurück zur Hauptkühlmittelpumpe 11 strömt. Der Hauptkreis 7 umfasst weiter einen vor der Hauptkühlmittelpumpe 11 angeordneten ersten Drehschieber 15, der während eines Warmlaufs der Brennkraftmaschine 1 so eingestellt werden kann, dass das durch den Wassermantel 12 hindurch geförderte Kühlmittel unter Umgehung des Hauptkühlers 13 durch den Kurzschlusszweig 8 direkt und ungekühlt zur Hauptkühlmittelpumpe 11 zurückströmt. Der Hauptkreis 7 umfasst außerdem einen hinter der Hauptkühlmittelpumpe 11 angeordneten zweiten Drehschieber 16, mit dem die Strömungsmenge des von der Hauptkühlmittelpumpe 11 durch den Hauptkreis 7 umgewälzten Kühlmittels gesteuert werden kann. Der Wassermantel 12 der Brennkraftmaschine 1 ist durch einen am Zylinderkurbelgehäuse 2 angeordneten Einlass 17 mit der Hauptkühlmittelpumpe 11 und durch einen am Zylinderkopf 3 angeordneten ersten Auslass 18 mit dem Hauptkühler 13 bzw. dem Kurzschlusszweig 8 verbunden.

Der Motorölkühlerzweig 9 enthält einen Motorölkühler 17, der hinter einem zweiten Auslass 19 des Wassermantels 12 am Zylinderkopf 3 und vor dem ersten Drehschieber 15 im Motorölkühlerzweig 9 angeordnet ist, so dass mittels des Drehschiebers 15 ein Teil des Kühlmittels zur Kühlung des Motoröls durch den Motorölkühler 17 hindurch geleitet werden kann.

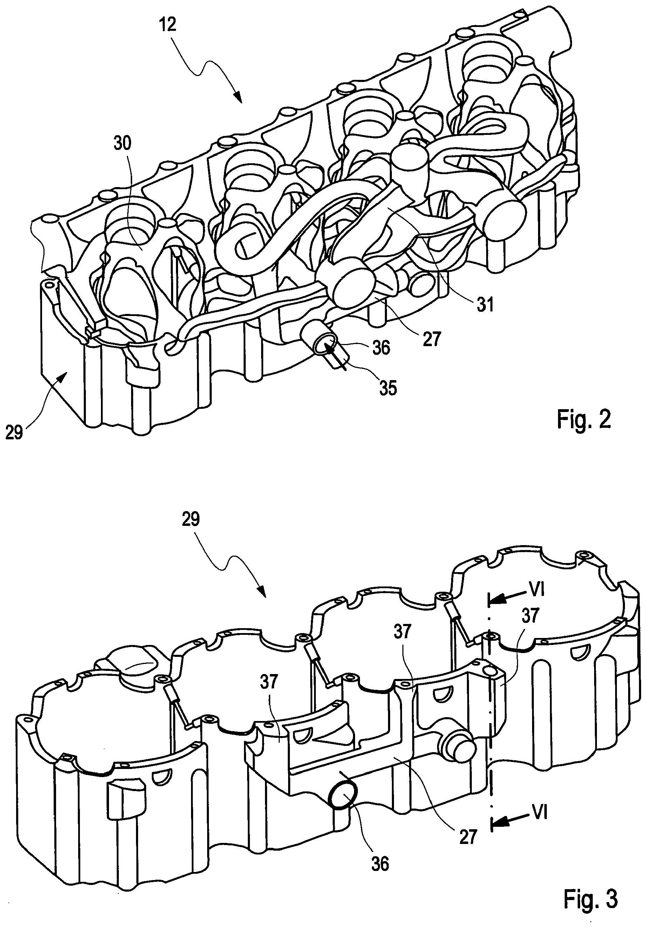

Der Nebenzweig 10 zweigt zwischen der Wassermantel 12 der Brennkraftmaschine 1 und dem Hauptkühler 13 bzw. dem Kurzschlusszweig 8 aus dem Hauptkreis 7 ab, enthält ein steuerbares Absperrventil 21, eine ein- und ausschaltbare elektrische Kühlmittelpumpe 22, sowie einen Heizungswärmetauscher 23 einer Innenraumheizung des Kraftfahrzeugs und führt dann zum Abgasturbolader 5, der durch das durch den Nebenzweig 10 strömende Kühlmittel gekühlt werden kann. Der Nebenzweig 10 mündet zwischen dem ersten Drehschieber 15 und der Hauptkühlmittelpumpe 11 wieder in den Hauptkreis 7 und ist durch zwei Leitungen 24, 25 mit dem Wassermantel 12 der Brennkraftmaschine 1 verbunden. Die erste 24 der beiden Leitungen 24, 25 zweigt hinter dem Heizungswärmetauscher 23 aus dem Nebenzweig 10 ab, enthält ein Rückschlagventil 26, das nur eine Strömung aus dem Nebenzweig 10 in den Wassermantel 12 zulässt, und mündet in eine Kühlmittel-Sammelschiene 27, die unter Bezugnahme auf die Figuren 3 bis 6 nachfolgend ausführlicher beschrieben ist. Die zweite Leitung 25 führt vom Wassermantel 12 zum Nebenzweig 10, in den sie hinter dem Abzweig der ersten Leitung 24 und vor dem Abgasturbolader 5 mündet. Die zweite Leitung 25 enthält ebenfalls ein Rückschlagventil 28, das nur eine Strömung vom Wassermantel 12 in den Nebenzweig 10 zulässt, so dass der Abgasturbolader 5 wahlweise entweder durch den Hauptkreis 7 und die zweite Leitung 25 oder durch den Nebenkreis 10 mit Kühlmittel versorgt werden kann.

Wie am besten in Fig. 2 dargestellt, umfasst der Wassermantel 12 der Brennkraftmaschine drei zusammenhängende bzw. miteinander kommunizierende Teile 29, 30, 31, die im Zylinderkurbelgehäuse 2, im Zylinderkopf 3 bzw. im integrierten Abgaskrümmer 4 ausgespart sind, wobei nachfolgend der Teil 29 als Wassermantel des Zylinderkurbelgehäuses 2, der Teil 30 als Wassermantel des Zylinderkopfs 3 und der Teil 31 als Wassermantel des Abgaskrümmers 4 bezeichnet wird.

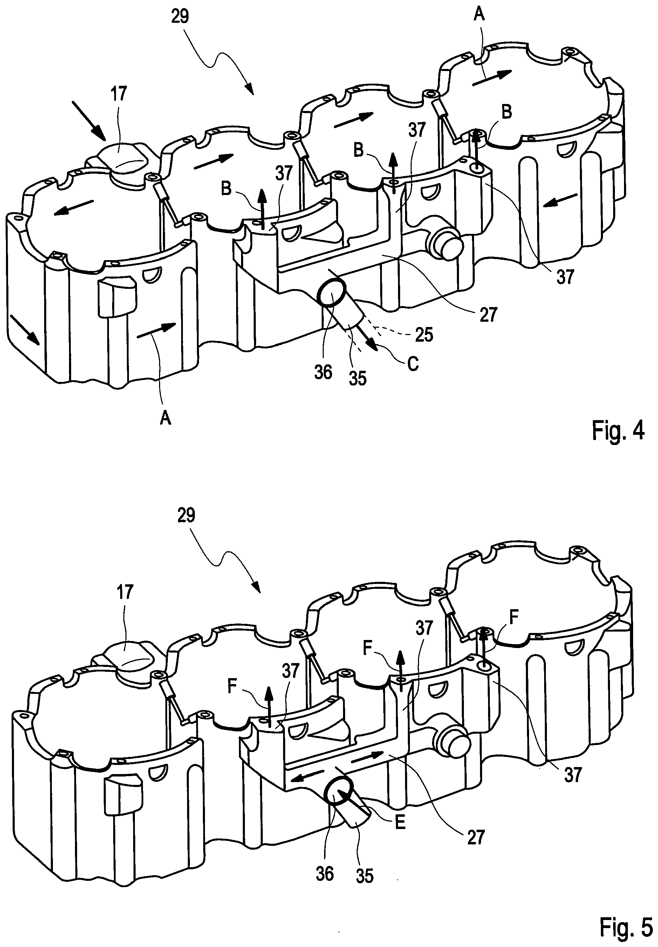

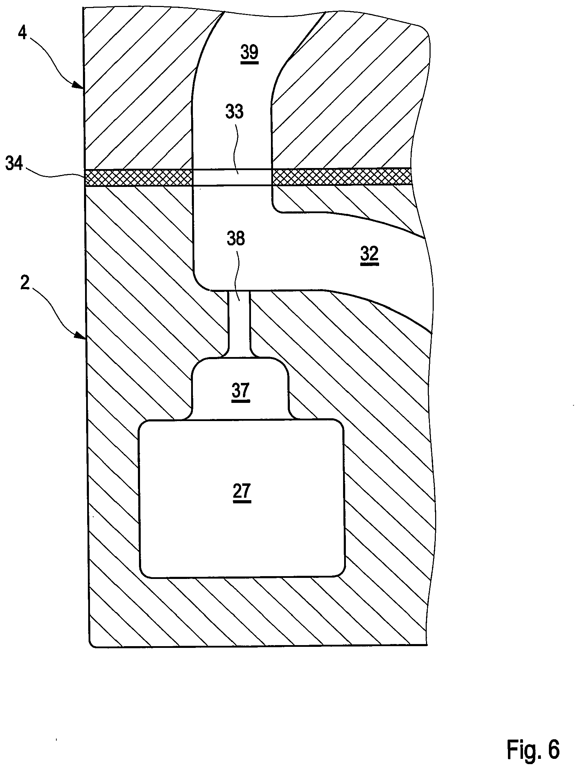

Wie in Fig. 1 und 4 dargestellt, wird das Kühlmittel im Normalbetrieb der Brennkraftmaschine 1 aus dem Hauptkreis 7 am Einlass 17 in den Wassermantel 29 des Zylinderkurbelgehäuses 2 zugeführt. Wie durch die Pfeile A in Fig. 4 dargestellt, strömt das Kühlmittel zuerst um die Zylinder herum durch den Wassermantel 29 des Zylinderkurbelgehäuses 2, bevor der größte Teil oberhalb der Sammelschiene 27 durch Kühlmittelkanäle 32 und Strömungsdurchlässe 33 einer Zylinderkopfdichtung 34 (Fig. 6) nach oben aus dem Zylinderkurbelgehäuse 2 austritt, wie durch Pfeile B in Fig. 4 dargestellt. Von dort strömt das Kühlmittel durch an die Strömungsdurchlässe 33 angrenzende Kühlmittelkanäle 39 in den Wassermantel 31 des Abgaskrümmers 4 und den Wassermantel 30 des Zylinderkopfs 3, aus dem es durch einen der Auslässe 18, 19 (Fig. 1) wieder austritt. Ein weiterer Teil des in das Zylinderkurbelgehäuse 2 zugeführten Kühlmittels strömt durch einen unterhalb der Sammelschiene 27 am Zylinderkurbelgehäuse 2 angeordneten Auslass 35 durch die Leitung 25 zum Abgasturbolader 5, wie durch den Pfeil C in Fig. 4 dargestellt.

Um zu verhindern, dass es nach dem Abstellen der Brennkraftmaschine 1 und dem dadurch bedingten Stillstand der Hauptkühlmittelpumpe 11 infolge einer hohen, im Betrieb im Abgaskrümmer 4 eingespeicherten Wärme zu einem Sieden von Kühlmittel im Wassermantel 31 des Abgaskrümmers 4 kommt, wird neben dem Abgasturbolader 5 auch der Abgaskrümmer 4 durch eine Nachlaufkühlung gekühlt. Zu diesem Zweck wird die elektrische Kühlmittelpumpe 22 in Betrieb genommen und das Ventil 21 im Nebenzweig 10 geöffnet, um Kühlmittel aus dem Hauptzweig 7 in Richtung der Pfeile D in Fig. 1 durch den Nebenzweig 10 umzuwälzen. Ein Teil des umgewälzten Kühlmittels kühlt den Abgasturbolader 5, während der Rest durch einen Einlass 36 der Sammelschiene 27 in den Wassermantel 12 zugeführt wird, wie durch den Pfeil E in Fig. 5 dargestellt, von wo ein überwiegender Teil des zugeführten Kühlmittels nach oben in den Abgaskrümmer 4 strömt, wie durch die Pfeile F in Fig. 5 dargestellt. Dabei wird mit Hilfe der Sammelschiene 27 vermieden, dass ein erheblicher Anteil des in den Wassermantel 12 zugeführten Kühlmittels wirkungslos durch das Zylinderkurbelgehäuse 2 strömt und nicht wie gewünscht in den Wassermantel 31 des Abgaskrümmers 4 gelangt.

Wie am besten in Fig. 3 und 6 dargestellt, weist die in das Zylinderkurbelgehäuse 2 integrierte allgemein horizontalen Sammelschiene 27 zu diesem Zweck mehrere aufwärts gerichtete Auslässe 37 auf, deren Anzahl zweckmäßig der Anzahl der Kühlmittelkanäle 31 im Abgaskrümmer 4 entspricht. Wie in Fig. 6 am Beispiel von einem der Auslässe 37 dargestellt, ist in jedem Auslass 37 eine vertikal ausgerichtete Durchtrittsöffnung 38 mit einem reduziertem Öffnungsquerschnitt angeordnet. In der Durchtrittsöffnung 38 wird das in die Sammelschiene 27 zugeführte Kühlmittel infolge der Querschnittseinschnürung stark beschleunigt, so dass es unmittelbar hinter der Durchlassöffnung 38 eine hohe Strömungsgeschwindigkeit und einem starken aufwärts gerichteten Strömungsimpuls besitzt. Hinter bzw. oberhalb der Durchtrittsöffnung 38 verzweigt sich jeder Auslass 37 in die beiden Kühlmittelkanäle 32, 39. Während der Kühlmittelkanal 39 in Verlängerung der Strömungsrichtung des Kühlmittels in der Durchtrittsöffnung 38 durch den oberhalb der Durchtrittsöffnung 38 angeordneten Strömungsdurchlass 33 der Zylinderkopfdichtung 34 in den darüber liegenden Wassermantel 31 (Fig. 2) des Abgaskrümmers 4 führt, zweigt der andere Kühlmittelkanal 32 etwa im rechten Winkel ab und führt dann in den Wassermantel 29 des Zylinderkurbelgehäuses 2. Aufgrund seines starken aufwärts gerichteten Strömungsimpulses hinter der Durchtrittsöffnung 38 strömt das Kühlmittel zum überwiegenden Teil durch den Strömungsdurchlass 33 der Zylinderkopfdichtung 34 in den Kühlmittelkanal 39 und weiter in den Wassermantel 31 des Abgaskrümmers, während es nur zu einem geringen Teil in den Kühlmittelkanal 32 umgelenkt wird und von dort in den Wassermantel 29 des Zylinderkurbelgehäuses 2 strömt. Das durch den Wassermantel 31 des Abgaskrümmers 4 strömende Kühlmittel strömt anschließend durch den Wassermantel 30 des Zylinderkopfs 3 zum Auslass 18 und/oder 19.

Derselbe oben beschriebene Effekt wie bei der Nachlaufkühlung wird auch im Warmlauf der Brennkraftmaschine 1 genutzt. Um diese letztere nach einem Kaltstart schnell aufzuheizen, wird zuerst das Kühlmittel im Wassermantel 12 der Brennkraftmaschine 1 nicht oder nur minimal umgewälzt, indem die beiden Drehschieber 15, 16 entsprechend angesteuert werden. Dies wird so lange fortgesetzt, bis an den heißesten Stellen, u. a. im integrierten Abgaskrümmer 4, eine Umwälzung des Kühlmittels notwendig ist. Zu diesem Zeitpunkt werden die beiden Drehschieber 15, 16 so angesteuert, dass das Kühlmittel nur durch den Nebenzweig 10 strömt, aus dem es dann durch die Leitung 24 in den Einlass 36 der Sammelschiene 27 zugeführt wird, um den Abgaskrümmer 4 zu kühlen. Nach dem Hindurchtritt durch den Wassermantel 31 des Abgaskrümmers 4 und den Wassermantel 30 des Zylinderkopfs 3 wird das Kühlmittel vom Auslass 18 durch den Hauptkreis 7 und den Kurzschlusszweig 8 zur Hauptkühlmittelpumpe 11 zurück geleitet, von wo es erneut durch den Nebenzweig 10 gefördert wird. Das im Abgaskrümmer 4 erwärmte Kühlmittel kann nach Bedarf durch den Heizungswärmetauscher 23 geleitet werden, um den Innenraum des Kraftfahrzeugs zu erwärmen.

Wenn die Brennkraftmaschine 1 bzw. das Kühlmittel eine gewünschte Betriebstemperatur erreicht haben, werden die Drehschieber 15, 16 angesteuert, um den Hauptkreis 7 zu öffnen und mittels der Hauptkühlmittelpumpe 11 eine größere Menge Kühlmittel durch den gesamten Wassermantel 12 der Brennkraftmaschine 1 umzuwälzen. Dabei wird das Kühlmittel zuerst durch den Einlass 17 in den Wassermantel 29 des Zylinderkurbelgehäuses 2 zugeführt und durch diesen umgewälzt, bevor es durch die Kühlmittelkanäle 32, die Strömungsdurchlässe 33 der Zylinderkopfdichtung 34 und die Kühlmittelkanäle 39 in den Wassermantel 31, 30 des Abgaskrümmers 4 und des Zylinderkopfs 3 strömt.

### BEZUGSZEICHENLISTE

- 1: Brennkraftmaschine
- 2: Zylinderkurbelgehäuse
- 3: Zylinderkopf
- 4: integrierter Abgaskrümmer
- 5: Abgasturbolader
- 6: Kühlmittelkreislauf
- 7: Hauptkreis
- 8: Kurzschlusszweig
- 9: Motorölkühlerzweig
- 10: Nebenzweig
- 11: Hauptkühlmittelpumpe
- 12: Wassermantel Brennkraftmaschine
- 13: Hauptkühler
- 14: Gebläse
- 15: erster Drehschieber
- 16: zweiter Drehschieber
- 17: Einlass
- 18: Auslass Wassermantel
- 19: Auslass Wassermantel
- 20: -
- 21: Absperrventil
- 22: elektrische Kühlmittelpumpe
- 23: Heizungswärmetauscher
- 24: Leitung
- 25: Leitung
- 26: Rückschlagventil
- 27: Sammelschiene
- 28: Rückschlagventil
- 29: Wassermantel Zylinderkurbelgehäuse
- 30: Wassermantel Zylinderkopf
- 31: Wassermantel Abgaskrümmer
- 32: Kühlmittelkanäle Zylinderkurbelgehäuse
- 33: Strömungsdurchlässe
- 34: Zylinderkopfdichtung

- 35: Auslass Wassermantel
- 36: Einlass Sammelschiene
- 37: Auslass Sammelschiene
- 38: Durchtrittsöffnung mit Querschnittsverengung
- 39: Kühlmittelkanäle Abgaskrümmer

## Patentansprüche

1. Brennkraftmaschine (1) mit einem Zylinderkurbelgehäuse (2) und einem Zylinderkopf (3), der einen integrierten Abgaskrümmer (4) aufweist, wobei das Zylinderkurbelgehäuse (2), der Zylinderkopf (3) und der integrierte Abgaskrümmer (4) einen zusammenhängenden Wassermantel (12) aufweisen, der einen Teil eines Kühlmittelkreislaufs (6) der Brennkraftmaschine (1) bildet, **dadurch gekennzeichnet, dass** der Kühlmittelkreislauf (6) eine Sammelschiene (27) umfasst, die durch Durchtrittsöffnungen (38) mit reduziertem Öffnungsquerschnitt mit dem Wassermantel (12) kommuniziert, und dass in Verlängerung einer Strömungsrichtung durch die Durchtrittsöffnungen (38) angeordnete Kühlmittelkanäle (39) des Wassermantels (12) zum Abgaskrümmer (4) führen, während hinter den Durchtrittsöffnungen (38) seitlich abzweigende Kühlmittelkanäle (32) des Wassermantels (12) in das Zylinderkurbelgehäuse (2) führen, sodass der überwiegende Anteil von der Sammelschiene (27) zugeführtem Kühlmittel durch die zum Abgaskrümmer (4) führenden Kühlmittelkanäle (39) strömt und nur ein geringer Anteil des Kühlmittels in die in das Zylinderkurbelgehäuse (2) führenden Kühlmittelkanäle (32) umgelenkt wird.

2. Brennkraftmaschine nach Anspruch 1, **dadurch gekennzeichnet, dass** die Sammelschiene (27) in das Zylinderkurbelgehäuse (2) integriert ist.

3. Brennkraftmaschine nach Anspruch 1 oder 2, **dadurch gekennzeichnet, dass** die Durchtrittsöffnungen (38) in aufwärts gerichteten Auslässen (37) der Sammelschiene (27) angeordnet sind, und dass die zum Abgaskrümmer (4) führenden Kühlmittelkanäle (39) in gerader Verlängerung der Auslässe (37) und der Durchtrittsöffnungen (38) nach oben führen.

4. Brennkraftmaschine nach einem der vorangehenden Ansprüche, **dadurch gekennzeichnet, dass** die Durchtrittsöffnungen (38) unterhalb von Strömungsdurchlässen (33) einer Zylinderkopfdichtung (34) angeordnet sind, wobei die Kühlmittelkanäle (39) oberhalb der Strömungsdurchlässe (33) zum Abgaskrümmer (4) führen, und wobei die Kühlmittelkanäle (32) unterhalb der Strömungsdurchlässe (33) abzweigen.

5. Brennkraftmaschine nach einem der vorangehenden Ansprüche, **dadurch gekennzeichnet, dass** die Sammelschiene (27) an einen Nebenzweig (10) des Kühlmittelkreislaufs (6) angeschlossen ist, der eine elektrische Kühlmittelpumpe (22) umfasst.

6. Brennkraftmaschine nach einem der vorangehenden Ansprüche, **dadurch gekennzeichnet, dass** die Sammelschiene (27) an einen Nebenzweig (10) des Kühlmittelkreislaufs (6) angeschlossen ist, der einen Heizungswärmetauscher (23) umfasst.

7. Brennkraftmaschine nach Anspruch 5 oder 6, **gekennzeichnet durch** Mittel (11, 15, 16, 21, 22) zum Zuführen von Kühlmittel aus dem Kühlmittelkreislauf (6) zur Sammelschiene (27) im Nachlauf und/oder beim Warmlauf der Brennkraftmaschine (1).

8. Verfahren zum Betreiben einer Brennkraftmaschine nach einem der vorangehenden Ansprüche, **dadurch gekennzeichnet, dass** ein durch den Kühlmittelkreislauf (6) umgewälztes Kühlmittel nach dem Abstellen der Brennkraftmaschine (1) in die Sammelschiene (27) zugeführt wird, um den integrierten Abgaskrümmer (4) zu kühlen und die Menge des Kühlmittels zu minimieren, die durch den Wassermantel (29) des Zylinderkurbelgehäuses (2) strömt.

9. Verfahren zum Betreiben einer Brennkraftmaschine nach einem der vorangehenden Ansprüche, **dadurch gekennzeichnet, dass** ein durch den Kühlmittelkreislauf umgewälztes Kühlmittel nach dem Start der Brennkraftmaschine (1) in die Sammelschiene (27) zugeführt wird, um den integrierten Abgaskrümmer (4) und den Zylinderkopf (3) zu kühlen und die Menge des Kühlmittels zu minimieren, die durch den Wassermantel (29) des Zylinderkurbelgehäuses (2) strömt.

10. Verfahren nach Anspruch 9, **dadurch gekennzeichnet, dass** das Kühlmittel durch einen Heizungswärmetauscher (23) in die Sammelschiene (27) zugeführt wird.

## Claims

1. Combustion engine (1) having a cylinder block (2) and a cylinder head (3) which has an integrated exhaust manifold (4), wherein the cylinder block (2), the cylinder head (3) and the integrated exhaust manifold (4) have a continuous water jacket (12) which forms a part of the coolant circuit (6) of the combustion engine (1), **characterised in that** the coolant circuit (6) comprises a busbar (27) which communicates with the water jacket (12) through passage openings (38) with reduced opening cross-section, and coolant channels (39) of the water jacket (12) arranged in the extension of a flow direction through the passage openings (38) lead to the exhaust manifold (4), whilst laterally branching coolant channels (32) of the water jacket (12) lead into the cylinder block (2) behind the passage openings (38), such that the predominant proportion of coolant supplied to the busbar (27) flows through the coolant channels (39) leading to the exhaust manifold (4) and only a low proportion of the coolant is deflected into the coolant channels (32) leading into the cylinder block (2).

2. Combustion engine according to claim 1, **characterised in that** the busbar (27) is integrated into the cylinder block (2).

3. Combustion engine according to claim 1 or 2, **characterised in that** the passage openings (38) are arranged in outlets (37) of the busbar (27) directed outwards, and the coolant channels (39) leading to the exhaust manifold (4) lead upwards in the linear extension of the outlets (37) and the passage openings (38).

4. Combustion engine according to one of the preceding claims, **characterised in that** the passage openings (38) are arranged underneath flow passages (33) of a cylinder head seal (34), wherein the coolant channels (39) lead above the flow passages (33) to the exhaust manifold (4), and wherein the coolant channels (32) branch underneath the flow passages (33).

5. Combustion engine according to one of the preceding claims, **characterised in that** the busbar (27) is connected to an offshoot (10) of the coolant circuit (6), which comprises an electrical coolant pump (22).

6. Combustion engine according to one of the preceding claims, **characterised in that** the busbar (27) is connected to an offshoot (10) of the coolant circuit (6), which comprises a heat exchanger (23).

7. Combustion engine according to claim 5 or 6, **characterised by** means (11, 15, 16, 21, 22) to supply coolant from the coolant circuit (6) to the busbar (27) in the follow-up to and/or during the warm-up of the combustion engine (1).

8. Method to operate a combustion engine according to one of the preceding claims, **characterised in that** a coolant circulated by the coolant circuit (6) is supplied into the busbar (27) after the shutdown of the combustion engine (1) in order to cool the integrated exhaust manifold (4) and to minimise the quantity of the coolant which flows through the water jacket (29) of the cylinder block (2).

9. Method to operate a combustion engine according to one of the preceding claims, **characterised in that** a coolant circulated by the coolant circuit is supplied into the busbar (27) after the start of the combustion engine (1) in order to cool the integrated exhaust manifold (4) and the cylinder head (3) and to minimise the quantity of the coolant which flows through the water jacket (29) of the cylinder block (2).

10. Method according to claim 9, **characterised in that** the coolant is supplied into the busbar (27) through a heat exchanger (23).

## Revendications

1. Moteur à combustion interne (1) avec un bloc-cylindres (2) et avec une culasse de cylindre (3) qui comporte un collecteur de gaz d'échappement (4) intégré,
dans lequel le bloc-cylindres (2), la culasse de cylindre (3) et le collecteur de gaz d'échappement (4) intégré comportent une chemise d'eau (12) continue qui forme une partie d'un circuit de fluide de refroidissement (6) du moteur à combustion interne (1),
**caractérisé en ce que** le circuit de fluide de refroidissement (6) comprend une barre collectrice (27) qui communique avec la chemise d'eau (12) par des ouvertures de passage (38) ayant une section transversale d'ouverture réduite et **en ce que** des canaux de fluide de refroidissement (39) de la chemise d'eau (12) qui sont agencés dans le prolongement d'un sens d'écoulement à travers les ouvertures de passage (38) mènent au collecteur de gaz d'échappement (4) tandis que des canaux de fluide de refroidissement (32) de la chemise d'eau (12) qui se ramifient latéralement après les ouvertures de passage (38) mènent dans le bloc-cylindres (2) de telle sorte que la majeure partie du fluide de refroidissement envoyé à la barre collectrice (27) s'écoule à travers les canaux de fluide de refroidissement (39) qui mènent au collecteur de gaz d'échappement (4) et seulement une petite partie du fluide de refroidissement est déviée dans les canaux de fluide de refroidissement (32) qui mènent dans le bloc-cylindres (2).

2. Moteur à combustion interne selon la revendication 1, **caractérisé en ce que** la barre collectrice (27) est intégrée dans le bloc-cylindres (2).

3. Moteur à combustion interne selon la revendication 1 ou 2, **caractérisé en ce que** les ouvertures de passage (38) sont agencées dans des sorties (37), dirigées vers le haut, de la barre collectrice (27) et **en ce que** les canaux de fluide de refroidissement (39) qui mènent au collecteur de gaz d'échappement (4) mènent vers le haut dans le prolongement droit des sorties (37) et des ouvertures de passage (38).

4. Moteur à combustion interne selon l'une des revendications précédentes, **caractérisé en ce que** les ouvertures de passage (38) sont agencées au-dessous de passages d'écoulement (33) d'un joint de culasse (34), les canaux de fluide de refroidissement (39) menant au-dessus des passages d'écoulement (33) au collecteur de gaz d'échappement (4) et les canaux de fluide de refroidissement (32) se ramifiant au-dessous des passages d'écoulement (33).

5. Moteur à combustion interne selon l'une des revendications précédentes, **caractérisé en ce que** la barre collectrice (27) est raccordée à une branche secondaire (10) du circuit de fluide de refroidissement (6), laquelle branche secondaire comprend une pompe de fluide de refroidissement (22) électrique.

6. Moteur à combustion interne selon l'une des revendications précédentes, **caractérisé en ce que** la barre collectrice (27) est raccordée à une branche secondaire (10) du circuit de fluide de refroidissement (6), laquelle branche secondaire comprend un échangeur de chaleur de chauffage (23).

7. Moteur à combustion interne selon la revendication 5 ou 6, **caractérisé par** des moyens (11, 15, 16, 21, 22) destinés à amener du fluide de refroidissement du circuit de fluide de refroidissement (6) à la barre collectrice (27) lors de la remise en marche et/ou de l'échauffement du moteur à combustion interne (1).

8. Procédé destiné à faire fonctionner un moteur à combustion interne selon l'une des revendications précédentes, **caractérisé en ce qu'un** fluide de refroidissement circulant dans le circuit de fluide de refroidissement (6) est envoyé après l'arrêt du moteur à combustion interne (1) dans la barre collectrice (27) afin de refroidir le collecteur de gaz d'échappement (4) intégré et de minimiser la quantité de fluide de refroidissement qui passe par la chemise d'eau (29) du bloc-cylindres (2).

9. Procédé destiné à faire fonctionner un moteur à combustion interne selon l'une des revendications précédentes, **caractérisé en ce qu'un** fluide de refroidissement circulant dans le circuit de fluide de refroidissement est envoyé après le démarrage du moteur à combustion interne (1) dans la barre collectrice (27) afin de refroidir le collecteur de gaz d'échappement (4) intégré et la culasse de cylindre (3) et de minimiser la quantité de fluide de refroidissement qui passe par la chemise d'eau (29) du bloc-cylindres (2).

10. Procédé selon la revendication 9, **caractérisé en ce que** le fluide de refroidissement est amené dans la barre collectrice (27) via un échangeur de chaleur de chauffage (23).
